# EUROPEAN PATENT SPECIFICATION

(11) **EP 1 676 725 B1**
(45) Date of publication and mention of the grant of the patent: **22.05.2013**
(21) Application number: 04788353.3
(22) Date of filing: 30.09.2004
(51) Int. Cl.: B60C 11/04, B60C 11/12, B60C 11/03, B60C 19/00

(54) **PNEUMATIC TIRE**
LUFTREIFEN
PNEUMATIQUE

(30) Priority: 01.10.2003 JP 2003343343
(43) Date of publication of application: 05.07.2006
(73) Proprietor: THE YOKOHAMA RUBBER CO., LTD., Tokyo 105-8685 (JP)
(72) Inventor: SUGITANI, Kenichiro, The Yokohama Rubber Co. Ltd., Hiratsuka-shi, Kanagawa 2548601 (JP)
(74) Representative: HOFFMANN EITLE
(86) International application number: PCT/JP2004/014325
(87) International publication number: WO 2005/032855

(56) References cited:
- EP-A1- 0 565 270
- JP-A- 4 043 105
- JP-A- 7 290 909
- JP-A- 10 217 719
- JP-A- 2000 238 510
- JP-A- 2003 182 310

## Description

### TECHNICAL FIELD

The present invention relates to pneumatic tires, and more particularly, to a pneumatic tire which can realize enhancement in both wet braking performance and noise characteristics, and can also improve steering stability.

### TECHNICAL BACKGROUND

There are well known pneumatic tires having a tread pattern based on blocks defined by tire-circumferentially extending main grooves and tire-widthwisely extending lug grooves disposed in the tread surface. In such pneumatic tires, the angles and positions of the lug grooves, for example, are adequately arranged to improve wet braking performance and noise characteristics (see Japanese patent application Kokai publication No. 8-164714, for example).

However, if the area of the grooves is increased in order to further improve wet braking performance, noise characteristics are deteriorated and steering stability is also degraded because of a decrease in block rigidity. Conventionally, theses characteristics and performance have been enhanced balancing them; however, there is a limit to improvement in them, suffering from a problem in that it is difficult to satisfy high requirements from the recent market.

EP 0 565 270 A1 discloses pneumatic tires, but fails to disclose the features of the characterizing portion of claim 1 below. Pneumatic tires are also disclosed in JP 4043105 A and JP 7290909 A.

### SUMMARY OF THE INVENTION

According to the present invention there is provided a pneumatic tire having a vehicle outer side and a vehicle inner side designated when mounted on a vehicle, the tire having a tread surface having at least three main grooves that extend straight in a circumferential direction of the tire, the at least three main grooves comprising a first main groove located first, a second main groove located second and a third main groove located third when counted from the vehicle outer side, ribs being formed between the first main groove and the second main groove and between the second main groove and the third main groove, respectively, first lug grooves being disposed at prescribed intervals in the circumferential direction of the tire, the first lug grooves extending in a widthwise direction of the tire from the third main groove toward the vehicle inner side to at least one ground contact end of the tire, blocks being defined by the third main groove and the first lug grooves, second lug grooves and third lug grooves being alternately disposed at prescribed intervals in the circumferential direction of the tire in the rib between the second main groove and the third main groove, the second lug grooves extending in the widthwise direction of the tire from the third main groove toward the vehicle outer side and each having an extension terminal end located within the rib, the third lug grooves extending in the widthwise direction of the tire from the third main groove toward the vehicle outer side and then extending in the circumferential direction of the tire, the third lug grooves each having an extension terminal end located within the rib, each third lug groove extending so as to cross over only one second lug groove adjacent thereto in the circumferential direction of the tire, characterized by the tire having a ratio a/b of a tire-widthwisely spacing distance (a) from the extension terminal end of the second lug groove to the second main groove to a width (b) of the rib between the second main groove and the third main groove being 0.10 to 0.35, a ratio c/d of a spacing distance (c) from the extension terminal end of the third lug groove to a third lug groove adjacent thereto as measured along an extending direction of a circumferentially extending portion of the third lug groove that extends in the circumferential direction of the tire to a combined length (d) of the spacing distance (c) and a length (m) of the circumferentially extending portion being 0.10 to 0.30.

Embodiments of the present invention are able to provide a pneumatic tire in which enhancement in both wet braking performance and noise characteristics can be realized, and steering performance can also be improved.

As described above, by forming the ribs between the first main groove and third main groove, high rigidity can be ensured in the region of the ribs; therefore, steering stability can be enhanced during turning operation, and noise characteristics can be improved.

While a block pattern having the first lug grooves disposed therein is formed in the region that is located on the vehicle inner side of the tire and on which a high ground contact pressure acts during braking, the second lug grooves and third lug grooves specified as described above are disposed in the rib adjacent thereto, whereby braking performance on wet road surfaces cab be improved, making enhancement in steering stability and noise characteristics.

### BRIEF DESCRIPTION OF THE DRAWINGS

To enable a better understanding of the present invention, and to show how the same may be carried into effect, reference will now be made, by way of example only, to the accompanying drawings, in which:-
FIG. 1 is a partial development view of a tread surface showing an embodiment of a pneumatic tire according to the present invention;
FIG. 2 is a partial enlarged view of FIG. 1; and
FIG. 3 is a partial development view of the tread surface of a conventional tire used in Example.

### DETAILED DESCRIPTION

An embodiment of the present invention will be described in detail below with reference to the attached drawings.

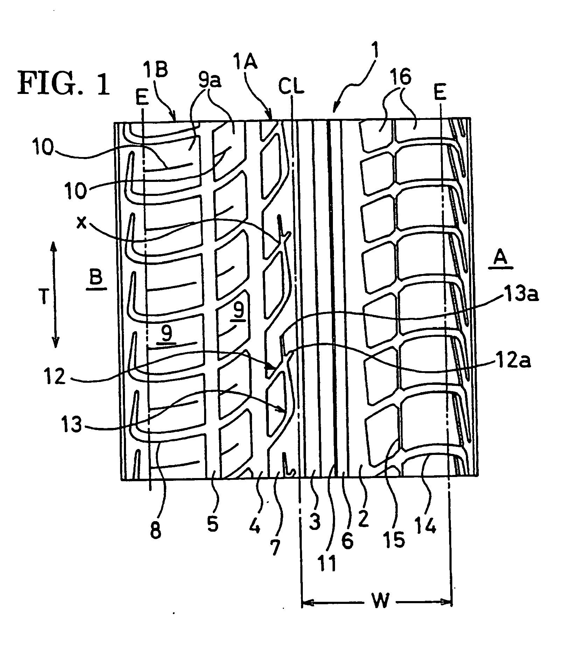

Referring to FIG. 1, there is shown an embodiment of a pneumatic tire according to the present invention; this pneumatic tire is to be mounted on a vehicle with the side A being on the outer side of the vehicle and with the side B being on the inner side of the vehicle.

The tire in which the vehicle outer side and vehicle inner side are designated when mounted on the vehicle as mentioned above, includes a tread surface 1, which has an asymmetrical tread pattern formed therein; four main grooves (groove width of 5 to 10 mm) that extend straight along the circumferential direction T of the tire are disposed asymmetrically with respect to the equatorial plane CL of the tire.

The four main grooves comprise a first main groove 2 located first, a second main groove 3 located second, a third main groove 4 located third, and a fourth main groove 5 located fourth when counted from the vehicle outer side.

The first main groove 2, second main groove 3 and third main groove 4 are placed in the center region 1A of the tread surface 1. The first main groove 2 and second main groove 3 are placed in a region located on the vehicle outer side of the tire equatorial plane CL in the center region 1A, and the second main groove 3 is located in the vicinity of the tire equatorial plane CL. The third main groove 4 is placed in a region located on the vehicle inner side of the tire equatorial plane CL in the center region 1A. The fourth main groove 5 is placed at an interfacing position between the center region 1 of the tread surface 1 and one shoulder region 1B thereof that is continuous therewith and located on the vehicle inner side. Ribs 6 and 7 are formed between the first main groove 2 and second main groove 3, and between the second main groove 3 and third main groove 4, respectively.

Disposed at prescribed intervals in the tire circumferential direction T are first lug grooves 8 that extend in the widthwise direction of the tire from the third main groove 4 toward the vehicle inner side beyond one ground contact end E of the tire, traversing the fourth main groove 5 located on the vehicle inner side of the third main groove 4; a lot of blocks 9 are defined by the third main groove 4, fourth main groove 5 and first lug grooves 8 in a region of the tread surface 1 located on the vehicle inner side of the third main groove 4. Each of the blocks 9 includes a ground contact surface 9a, that has a sipe 10 extending in the tire widthwise direction.

A narrow groove (groove width of 0.5 to 2.5 mm) 11 that extends straight along the tire circumferential direction T is disposed in the center region of the rib 6 between the first main groove 2 and second main groove 3. Second lug grooves 12 and third lug grooves 13 are alternately placed in the rib 7 between the second main groove 3 and third main groove4, the second lug grooves 12 extending in the tire widthwise direction from the third main groove 4 toward the vehicle outer side and each having an extension terminal end 12a that doe not communicate with the second main groove 3 but is located within the rib 7, the third lug grooves 13 extending in the tire widthwise direction from the third main groove 4 toward the vehicle outer side and each having an extension terminal end 13a that is located within the rib 7, the third lug grooves 13 curving and extending straight in the tire circumferential direction T.

Each of the third lug grooves 13 extends crossing only one second lug groove 12 adjacent thereto in the tire circumferential direction T. The third lug groove 13 crosses over the second lug groove 12, and the cross part x thereof is located substantially centrally of the rib 7 in the tire widthwise direction.

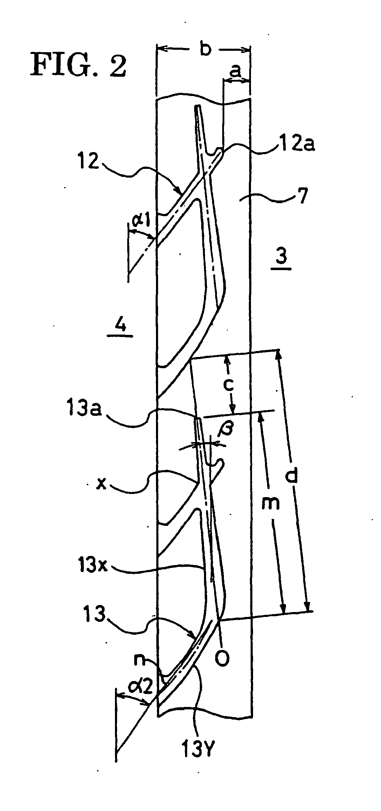

As shown in FIG. 2, the ratio a/b of the tire-widthwisely spacing distance a (mm) as measured from the extension terminal end 12a of the second lug groove 12 to the second main groove 3 in parallel to the axis of the tire to the width b (mm) of the rib 7 ranges from 0.10 to 0.35. The ratio c/d of the spacing distance c (mm) as measured from the extension terminal end 13a of the third lug groove 13 to a third lug groove 13 adjacent thereto along the extending direction of the circumferentially extending portion 13X of the third lug groove 13 that extends in the tire circumferential direction T to the combined length d (mm) of.the spacing distance c and the length m of the circumferentially extending portion 13X is set in the range of 0.10 to 0.30. The length m of the circumferentially extending portion 13X referred here is the length measured along the groove-widthwise center line O of the circumferentially extending portion 13X as shown in FIG. 2.

Disposed at prescribed intervals in tire circumferential direction T in the region of the tread surface 1A located on the vehicle outer side of the first main groove 2 are fourth lug grooves 14 that extend in the tire widthwise direction from the first main groove 2 toward the vehicle outer side beyond the other ground contact end E of the tire. A narrow groove (groove width of 0.5 to 2.5 mm) 15 that extends straight along the tire circumferential direction T is disposed in the region of the tread surface 1A located on the vehicle outer side of the first main groove 2; a lot of blocks 16 are defined by the first main groove 2, fourth lug grooves 14 and narrow groove 15.

The above first lug grooves 8, the second lug grooves 12, the widthwisely extending portions 13Y of the third lug grooves 13 that extend in the tire widthwise direction, and the fourth lug grooves 14 are inclined grooves that are inclined with respect to the tire widthwise direction so that the portion of each groove located on the vehicle outer side thereof is positioned closer to the side of the extending direction in the tire circumferential direction T of the third lug grooves 13 than the portion of the groove located on the vehicle inner side thereof.

According to the present invention, by forming the ribs 6 and 7 between the first main groove 2 and third main groove 4, high rigidity can be ensured in the region of the ribs; therefore, steering stability can be enhanced during turning operation, and noise characteristics can be improved.

A block pattern having the first lug grooves 8 disposed therein is formed in the region that is located on the vehicle inner side of the tire and on which a high ground contact pressure acts during braking, and the second lug grooves 12 and third lug grooves 13 specified as described above are disposed in the rib 7 adjacent thereto, thereby enabling braking performance on wet road surfaces to be improved, making enhancement in steering stability and noise characteristics. Accordingly, enhancement in both wet braking performance and noise characteristics can be realized, and steering performance also can be improved.

The blocks 9 in the region located on the vehicle inner side of the tire have sipes 10 that extend in the tire widthwise direction, whereby wet braking performance can be further improved.

The narrow groove 11 extends along the tire circumferential direction T in the rib 6 that is located on the vehicle outer side of the tire equatorial plane CL and has no lug grooves to thereby decrease the rigidity of the rib; therefore, feeling of a handling response can be improved during straight running operation without deterioration of steering stability during turning operation.

If the ratio a/b is less than 0.10, it is difficult to improve steering stability and noise characteristics because a decrease in the rigidity of the rib 7 increases. If the ratio a/b is greater than 0.35, the effect of improvement in wet braking performance can not be obtained because the extending length of the second lug grooves 12 is not sufficient.

If the ratio c/d is less than 0.10 also, it is difficult to improve steering stability and noise characteristics; if the ratio c/d exceeds 0.30, wet braking performance can not be improved.

In the present invention, the first, second and third main grooves 2, 3 and 4 are preferably positioned as follows: if W (mm) is the 1/2 ground contact width defined as a length measured in parallel to the tire axis from the tire equatorial plane CL to the tire ground contact end E, the first main groove 2 is in the range of 0.40W to 0.55W from the tire equatorial plane CL toward the vehicle outer side, the second main groove 3 is in the range of 0.05W to 0.25W from the tire equatorial plane CL toward the vehicle outer side, and the third main groove 4 is in the range of 0.20W to 0.45W from the tire equatorial plane CL toward the vehicle inner side.

If the main grooves 2, 3 and 4 are positioned tire-axially inwardly of the ranges, noise characteristics are lowered because of concentration of the main grooves 2, 3 and 4 into the center side. If the main grooves 2, 3 and 4 are positioned tire-axially outwardly of the ranges, cornering performance is reduced because of a decrease in block rigidity in the shoulder sides.

In the case of a pneumatic tire for passenger cars, the 1/2 ground contact width W referred here is measured under conditions of an air pressure of 220 kPa and a load of 4 kN with the pneumatic tire mounted on a standard rim specified in JATMA.

The width of the rib 6 is preferably in the range of about 10 mm to about 30 mm, and the width of rib 7 is preferably in the range of about 15 mm to about 45 mm. If the widths of the ribs 6 and 7 are lower than the ranges, steering stability is degraded because of a decrease in rib rigidity. If the widths of the ribs 6 and 7 are higher than the ranges, drainage characteristics are lowered because of a decrease in groove area.

The inclination angle α1 of each second lug groove 12 with respect to the tire circumferential direction T and the inclination angle α2 of the widthwisely extending portion 13Y of each third lug groove 13 with respect to the tire circumferential direction T preferably range from 25° to 50°, respectively, and the inclination angle β of the circumferentially extending portion 13X of each third lug groove 13 with respect to the tire circumferential direction T preferably ranges from 0° to 30°. The circumferentially extending portion 13X may be inclined in an opposite direction from the inclination direction shown in the drawings with respect to the tire circumferential direction T.

If the inclination angles α1 and α2 are less than 25°, cornering performance is lowered because of a decrease in the rigidity of the rib 7. If the inclination angles α1 and α2 are greater than 50°, drainage characteristics are degraded. If the inclination angle β is greater than 30° also, cornering performance is lowered because of a decrease in the rigidity of the rib 7.

As shown in the drawings, when the widthwisely extending portion 13Y of each third lug groove 13 extends in a curved line, the inclination angle β is the angle of a straight line n connecting the opposing terminal ends of the widthwisely extending portion 13Y located on the widthwise center of the groove.

In the above embodiment, the first lug grooves 8 and fourth lug grooves 14 extend beyond the tire ground contact ends E in the tire widthwise direction; however, they may extend to at least the tire ground contact ends E.

The above embodiment shows an example of the case where four main grooves 2, 3, 4 and 5 are provided; however, there is no limitation thereto; the above embodiment may be arranged such that three main grooves 2, 3 and 4 are provided; at least three main grooves 2, 3 and 4, and preferably four main grooves 2, 3, 4 and 5 as described above in terms of wet braking performance are provided.

The present invention is preferably applicable to a pneumatic tire for passenger cars in particular.

### EXAMPLE

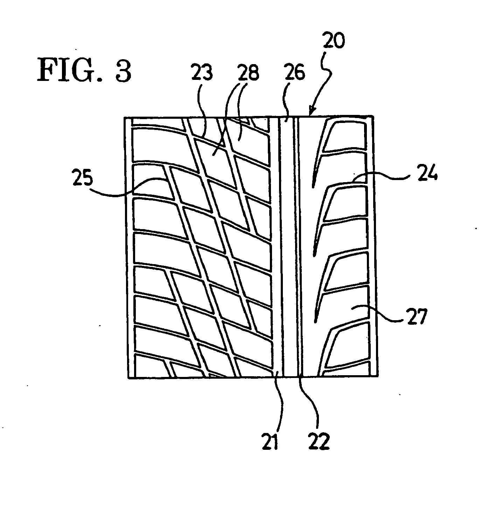

Prepared were tires according to the present invention tires 1 to 9, comparison tires 1 to 4, and conventional tire, each having a tire size of 195/60R15, the present invention tires 1 to 9 and comparison tires 1 to 4 each having a tread pattern shown in FIG. 1, in which the ratio a/b and the ratio c/d were as shown in Table 1, the conventional tire having a tread pattern shown in FIG. 3. In FIG. 3, reference numerals 21 and 22 denote circumferential grooves, reference numerals 23 and 24 denote lug grooves, reference numeral 25 denote an inclination groove, reference numerals 26 and 27 denote ribs, and reference numeral 28 denotes a block.

In the present invention tires 1 to 9 and comparative tires 1 to 4, the positions of the first, second and third main grooves, the widths of the ribs, the inclination angle α1 of each second lug groove, the inclination angle α2 of the widthwisely extending portion of each third lug groove, and the inclination angle β of the circumferentially extending portion of each third lug groove are the same and as follows:
Position of First Main Groove: 0.46W
Position of Second Main Groove: 0.17W
Position of Third Main Groove: 0.31W
Width of Rib 6: 17 mm
Width of Rib 7: 19 mm
Inclination Angle α1 of Second Lug Groove: 38°
Inclination Angle α2 of Widthwisely Extending Portion of Third Lug Groove: 36°
Inclination Angle β of Circumferentially Extending Portion of Third Lug Groove: 8°

The test tires were seated on 15x6JJ sized rims, inflated to an air pressure of 220 kPa, and mounted on a passenger car of 1.8 litter displacement; evaluation testing for steering stability, wet braking performance and noise characteristics was carried out on the test tires according to the following measurement methods, obtaining the results shown in Table 1.

### Steering Stability

Feeling testing was conducted on a dry road test course by a test driver; the results were represented by an index where the conventional tire was 100. As the index value is greater, steering stability is better.

### Wet Braking Performance

Full braking was applied to the car running at a speed of 100 km/h on a wet road test course until the car was stopped, measuring the brake stopping distance; this testing was repeated five times. Wet braking performance was evaluated on the basis of the average of the five brake stopping distances; the results were represented by an index where the conventional tire was 100. As the index value is greater, wet braking performance is better.

### Noise Characteristics

Vehicle interior noise was measured while the car was run straight at a speed of 60 km/h on a dry road test course; the results were represented by an index where the conventional tire was 100. As the index value is greater, noise characteristics are better.

**Table 1**

| | a/b | c/d | Steering Stability | Wet Performance | Noise Characteristics |
|---|---|---|---|---|---|
| Conventional Tire | --- | --- | 100 | 100 | 100 |
| Comparison Tire 1 | 0.05 | 0.20 | 99 | 109 | 98 |
| Present Invention Tire 1 | 0.10 | 0.20 | 101 | 108 | 101 |
| Present Invention Tire 2 | 0.15 | 0.20 | 103 | 108 | 103 |
| Present Invention Tire 3 | 0.25 | 0.20 | 105 | 106 | 104 |
| Present Invention Tire 4 | 0.30 | 0.20 | 106 | 104 | 105 |
| Present Invention Tire 5 | 0.35 | 0.20 | 106 | 102 | 105 |
| Comparison Tire 2 | 0.40 | 0.20 | 105 | 98 | 105 |
| Comparison Tire 3 | 0.25 | 0.05 | 98 | 108 | 99 |
| Present Invention Tire 6 | 0.25 | 0.10 | 103 | 107 | 101 |
| Present Invention Tire 7 | 0.25 | 0.15 | 104 | 107 | 102 |
| Present Invention Tire 8 | 0.25 | 0.25 | 105 | 105 | 103 |
| Present Invention Tire 9 | 0.25 | 0.30 | 105 | 101 | 103 |
| Comparison Tire 4 | 0.25 | 0.35 | 106 | 98 | 103 |

As can be seen from Table 1, the present invention tires can improve steering stability, wet braking performance and noise characteristics concurrently.

### INDUSTRIAL APPLICABILITY

The pneumatic tire of the present invention having the aforementioned excellent effects can be used very effectively as a pneumatic tire to be mounted on passenger cars in particular.

## Claims

1. A pneumatic tire having a vehicle outer side (A) and a vehicle inner side (B) designated when mounted on a vehicle, the tire having a tread surface (1) having at least three main grooves (2, 3, 4, 5) that extend straight in a circumferential direction (T) of the tire, the at least three main grooves comprising a first main groove (2) located first, a second main groove (3) located second and a third main groove (4) located third when counted from the vehicle outer side, ribs (6, 7) being formed between the first main groove (2) and the second main groove (3) and between the second main groove (3) and the third main groove (4), respectively, first lug grooves (8) being disposed at prescribed intervals in the circumferential direction of the tire, the first lug grooves (8) extending in a widthwise direction of the tire from the third main groove (4) toward the vehicle inner side (B) to at least one ground contact end (E) of the tire, blocks (9) being defined by the third main groove (4) and the first lug grooves (8), second lug grooves (12) and third lug grooves (13) being alternately disposed at prescribed intervals in the circumferential direction of the tire in the rib (7) between the second main groove (3) and the third main groove (4), the second lug grooves (12) extending in the widthwise direction of the tire from the third main groove (4) toward the vehicle outer side (A) and each having an extension terminal end (12a) located within the rib (7), the third lug grooves (13) extending in the widthwise direction of the tire from the third main groove (4) toward the vehicle outer side (A) and then extending in the circumferential direction of the tire, the third lug grooves (13) each having an extension terminal end (13a) located within the rib (7), each third lug groove (13) extending so as to cross over only one second lug groove (12) adjacent thereto in the circumferential direction of the tire, **characterized by** the tire having a ratio a/b of a tire-widthwisely spacing distance (a) from the extension terminal end (12a) of the second lug groove (12) to the second main groove (3) to a width (b) of the rib (7) between the second main groove (3) and the third main groove (4) being 0.10 to 0.35, a ratio c/d of a spacing distance (c) from the extension terminal end (13a) of the third lug groove (13) to a third lug groove (13) adjacent thereto as measured along an extending direction of a circumferentially extending portion of the third lug groove (13) that extends in the circumferential direction (T) of the tire to a combined length (d) of the spacing distance (c) and a length (m) of the circumferentially extending portion being 0.10 to 0.30.

2. A pneumatic tire according to claim 1, wherein the first main groove (2) and the second main groove (3) are disposed in a region (1) located on the vehicle outer side (A) of an equatorial plane (CL) of the tire, and the third main groove (4) is disposed in a region (lA) located on the vehicle inner side of the equatorial plane of the tire.

3. A pneumatic tire according to claim 2, wherein the first main groove (2) is placed in a range of 0.40W to 0.55W from the equatorial plane (CL) of the tire toward the vehicle outer side (A), the second main groove (3) is placed in a range of 0.05W to 0.25W from the equatorial plane (CL) of the tire toward the vehicle outer side (A), and the third main groove (4) is placed in a range of 0.20W to 0.45W from the equatorial plane (CL) of the tire toward the vehicle inner side (B), where W (mm) is the 1/2 ground contact width defined as a length measured in parallel to an axis of the tire from the equatorial plane (CL) of the tire to the ground contact end (E) of the tire.

4. A pneumatic tire according to claim 1, 2 or 3, wherein the first lug grooves (8), the second lug grooves (12), widthwisely extending portions of the third lug grooves (13) that extend in the widthwise direction of the tire are inclined with respect to the widthwise direction of the tire so that portions thereof located on the vehicle outer sides thereof are positioned closer to a side of the tire-circumferentially extending direction (T) of the third lug grooves than portions thereof located on the vehicle inner sides thereof.

5. A pneumatic tire according to claim 4, wherein the first lug grooves (8) each have an inclination angle 1 that is 25° to 50° with respect to the circumferential direction (T) of the tire, and the widthwisely extending portions of the third lug grooves each have an inclination angle 2 that is 25° to 50° with respect to the circumferential direction (T) of the tire.

6. A pneumatic tire according to any one of claims 1 to 5, wherein the circumferentially extending portions of the third lug grooves (13) each have an inclination angle that is 0° to 30° with respect to the circumferential direction (T) of the tire.

7. A pneumatic tire according to any one of claims 1 to 6, wherein the rib (6) between the first main groove (2) and the second main groove (3) has a width that is 10 mm to 30 mm, and the rib (7) between the second main groove (3) and the third main groove (4) has a width that is 15 mm to 40 mm.

8. A pneumatic tire according to any one of claims 1 to 7, wherein the blocks (9) each have a sipe (10) extending in the widthwise direction of the tire.

9. A pneumatic tire according to any one of claims 1 to 8, wherein the rib (6) between the first main groove (2) and the second main groove (3) has a narrow groove (11) extending in the circumferential direction (T) of the tire in a center region thereof.

10. A pneumatic tire according to any one of claims 1 to 9, wherein the tread surface includes fourth lug grooves (14) that are disposed at prescribed intervals in the circumferential direction (T) of the tire, the fourth lug grooves (14) extending in the widthwise direction of the tire from the first main groove (2) toward the vehicle outer side (A) to at least the other ground contact end (E) of the tire, blocks (16) being defined by the first main groove (2) and the fourth lug grooves (14).

11. A pneumatic tire according to claim 10, wherein the fourth lug grooves (14) are inclined with respect to the widthwise direction of the tire so that portions thereof located on the vehicle outer sides thereof are positioned closer to a side of the tire-circumferentially extending direction of the third lug grooves (13) than portions thereof located on the vehicle inner sides thereof.

12. A pneumatic tire according to any one of claims 1 to 11, wherein the tread surface includes a fourth main groove (5) that extends in the circumferential direction (T) of the tire, the fourth main groove (5) being disposed in a region of the tread surface on the vehicle inner side (A) of the third main groove (4).

13. A pneumatic tire according to any one of claims 1 to 12, wherein the tread surface includes a narrow groove (15) that extends in the circumferential direction (T) of the tire in a region located on the tire outer side (A) of the first main groove (2).

## Patentansprüche

1. Pneumatischer Reifen mit einer Fahrzeug-äußeren Seite (A) und einer Fahrzeug-inneren Seite (B), die im am Fahrzeug montierten Zustand bestimmt sind, wobei der Reifen eine Lauffläche (1) mit mindestens drei Hauptrillen (2, 3, 4, 5) aufweist, die sich geradlinig in einer Umfangsrichtung (T) des Reifens erstrecken, wobei die mindestens drei Hauptrillen eine erste Hauptrille (2), die als Erste, eine zweite Hauptrille (3), die als Zweite, und eine dritte Hauptrille (4), die als Dritte angeordnet sind, aufweisen, wenn von der Fahrzeug-äußeren Seite aus gezählt, wobei zwischen der ersten Hauptrille (2) und der zweiten Hauptrille (3) und zwischen der zweiten Hauptrille (3) und der dritten (4) Hauptrille (4) jeweils Rippen (6, 7) ausgebildet sind, in vorgegebenen Intervallen entlang der Umfangsrichtung des Reifens erste Stollenrillen (8) vorgesehen sind, sich die ersten Stollenrillen (8) in einer Breitenrichtung des Reifens von der dritten Hauptrille (4) in Richtung der Fahrzeug-inneren Seite (B) zu mindestens einem Bodenkontaktende (E) des Reifens hin erstrecken, wobei durch die dritte Hauptrille (4) und die ersten Stollenrillen (8), zweiten Stollenrillen (12) und dritten Stollenrillen (13), die in vorgegebenen Intervallen entlang der Umfangsrichtung des Reifens in der Rippe (7) zwischen der zweiten Hauptrille (3) und der dritten Hauptrille (4) alternierend angeordnet sind, Blöcke (9) definiert sind, wobei sich die zweiten Stollenrillen (12) in der Breitenrichtung des Reifens von der dritten Hauptrille (4) in Richtung der Fahrzeug-äußeren Seite (A) erstrecken und jeweils ein in der Rippe (7) angeordnetes Erweiterungsanschlussende (12a) aufweisen, sich die dritten Stollenrillen (13) in der Breitenrichtung des Reifens von der dritten Hauptrille (4) in Richtung der Fahrzeug-äußeren Seite (A) erstrecken und sich dann in der Umfangsrichtung des Reifens erstrecken, die dritten Stollenrillen (13) jeweils ein innerhalb der Rippe (7) angeordnetes Erweiterungsanschlussende (13a) aufweisen, sich jede dritte Stollenrille (13) so erstreckt, dass sie nur eine einzige in der Umfangsrichtung des Reifens benachbart dazu angeordnete zweite Stollenrille (12) überkreuzt, **dadurch gekennzeichnet, dass** der Reifen ein Verhältnis a/b einer Reifenbreiten-Beabstandungsdistanz (a), von dem Erweiterungsanschlussende (12a) der zweiten Stollenrille (12) zu der zweiten Hauptrille (3), zu einer Breite (b) der Rippe (7) zwischen der zweiten Hauptrille (3) und der dritten Hauptrille (4) aufweist, das von 0.10 bis 0.35 beträgt, ein Verhältnis c/d einer Beabstandungsdistanz (c) von dem Erweiterungsanschlussende (13a) der dritten Stollenrille (13) zu einer benachbart dazu angeordneten dritten Stollenrille (13), gemäß einer Messung entlang einer Erstreckungsrichtung eines sich umfangsmäßig erstreckenden Abschnitts der dritten Stollenrille (13), welche sich in der Umfangsrichtung (D) des Reifens erstreckt, zu einer kombinierten Länge (d) der Beabstandungsdistanz (c) und einer Länge (m) des sich in Umfangsrichtung erstreckenden Abschnitts von 0.10 bis 0.30 beträgt.

2. Pneumatischer Reifen nach Anspruch 1, bei dem die erste Hauptrille (2) und die zweite Hauptrille (3) in einem Bereich (1) an der Fahrzeug-äußeren Seite (A) einer Äquatorialebene (CL) des Reifens angeordnet sind, und die dritte Hauptrille (4) in einem Bereich (1A) an der Fahrzeug-inneren Seite der Äquatorialebene des Reifens angeordnet ist.

3. Pneumatischer Reifen nach Anspruch 2, bei dem die erste Hauptrille (2) in Richtung der Fahrzeug-äußeren Seite (A) in einem Abstand von 0.40W bis 0.55W zu der Äquatorialebene (CL) des Reifens platziert ist, die zweite Hauptrille (3) in Richtung der Fahrzeug-äußeren Seite (A) in einem Abstand von 0.05W bis 0.25W zu der Äquatorialebene (CL) des Reifens platziert ist, und die dritte Hauptrille (4) in Richtung der Fahrzeug-inneren Seite (B) in einem Abstand von 0.20W bis 0.45W zu der Äquatorialebene (CL) des Reifens platziert ist, wobei W (mm) die 1/2 Bodenkontaktbreite ist, die als parallel zu einer Achse des Reifens gemessene Länge von der Äquatorialebene (CL) des Reifens bis zu dem Bodenkontaktende (E) des Reifens definiert ist.

4. Pneumatischer Reifen nach einem der Ansprüche 1, 2 oder 3, bei dem die ersten Stollenrillen (8), die zweiten Stollenrillen (12), sich in Breitenrichtung erstreckende Abschnitte der dritten Stollenrillen (13), welche sich in der Breitenrichtung des Reifens erstrecken, in Bezug auf die Breitenrichtung des Reifens geneigt ausgebildet sind, so dass an der Fahrzeug-äußeren Seite liegende Abschnitte derselben näher an einer Seite der sich in Reifenumfang erstreckenden Richtung (T) der dritten Stollenrillen angeordnet sind als Abschnitte derselben, die an der Fahrzeug-inneren Seite derselben angeordnet sind.

5. Pneumatischer Reifen nach Anspruch 4, bei dem die ersten Stollenrillen (8) jeweils einen Neigungswinkel 1 aufweisen, der 25° bis 50° in Bezug auf die Umfangsrichtung (T) des Reifens beträgt, und die sich in Breitenrichtung erstreckenden Abschnitte der dritten Stollenrillen jeweils einen Neigungswinkel 2 aufweisen, der 25° bis 50° in Bezug auf die Umfangsrichtung (T) des Reifens beträgt.

6. Pneumatischer Reifen nach einem der Ansprüche 1-5, bei dem die sich in Umfangsrichtung erstreckenden Abschnitte der dritten Stollenrillen (13) jeweils einen Neigungswinkel aufweisen, der 0° bis 30° in Bezug auf die Umfangsrichtung (T) des Reifens beträgt.

7. Pneumatischer Reifen nach einem der Ansprüche 1-6, bei dem die Rippe (6) zwischen der ersten Hauptrille (2) und der zweiten Hauptrille (3) eine Breite aufweist, die von 10 mm bis 30 mm beträgt, und die Rippe (7) zwischen der zweiten Hauptrille (3) und der dritten Hauptrille (4) eine Breite aufweist, die von 15 mm bis 40 mm beträgt.

8. Pneumatischer Reifen nach einem der Ansprüche 1-7, bei dem die Blöcke (9) jeweils eine Lamelle (10) aufweisen, die sich in der Breitenrichtung des Reifens erstreckt.

9. Pneumatischer Reifen nach einem der Ansprüche 1-8, bei dem die Rippe (6) zwischen der ersten Hauptrille (2) und der zweiten Hauptrille (3) eine schmale Rille (11) aufweist, die sich in der Umfangsrichtung (D) des Reifens, in einem Zentralbereich desselben, erstreckt.

10. Pneumatischer Reifen nach einem der Ansprüche 1-9, bei dem die Lauffläche vierte Stollenrillen (14) aufweist, die in vorgegebenen Intervallen in der Umfangsrichtung (T) des Reifens angeordnet sind, sich die vierten Stollenrillen (14) in der Breitenrichtung des Reifens von der ersten Hauptrille (2) in Richtung der Fahrzeug-äußeren Seite (A) mindestens zu dem anderen Bodenkontaktende (E) des Reifens erstrecken, wobei Blöcke (16) durch die erste Hauptrille (2) und die vierten Stollenrillen (14) definiert sind.

11. Pneumatischer Reifen nach Anspruch 10, bei dem die vierten Stollenrillen (14) in Bezug auf die Breitenrichtung des Reifens geneigt ausgebildet sind, so dass Abschnitte derselben, die an der Fahrzeug-äußeren Seite derselben angeordnet sind, näher an einer Seite der sich Reifenumfangs-mäßig erstreckenden Richtung der dritten Stollenrillen (13) angeordnet sind als Abschnitte derselben, die an der Fahrzeug-inneren Seite derselben angeordnet sind.

12. Pneumatischer Reifen nach einem der Ansprüche 1-11, bei dem die Lauffläche eine vierte Hauptrille (5) aufweist, die sich in der Umfangsrichtung (T) des Reifens erstreckt, wobei die vierte Hauptrille (5) in einem Bereich der Lauffläche an der Fahrzeug-inneren Seite (A) der dritten Hauptrille (4) angeordnet ist.

13. Pneumatischer Reifen nach einem der Ansprüche 1-12, bei dem die Lauffläche eine schmale Rille (15) aufweist, die sich in einem Bereich, der an der äußeren Reifenseite (A) der ersten Hauptfläche (2) angeordnet ist, in der Umfangsrichtung (T) des Reifens erstreckt.

## Revendications

1. Bandage pneumatique ayant un côté extérieur de véhicule (A) et un côté intérieur de véhicule (B) conçus lors du montage sur un véhicule, le bandage ayant une surface de bande de roulement (1) ayant au moins trois rainures principales (2, 3, 4, 5) qui s'étendent d'une manière rectiligne dans une direction circonférentielle (T) du bandage, les au moins trois rainures principales comprenant une première rainure principale (2) située en premier, une deuxième rainure principale (3) située en deuxième et une troisième rainure principale (4) située en troisième lors d'un comptage depuis le côté extérieur du véhicule, des nervures (6, 7) étant formées entre la première rainure principale (2) et la deuxième rainure principale (3) et entre la deuxième rainure principale (3) et la troisième rainure principale (4), respectivement, des premières rainures de talon (8) étant disposées à des intervalles prescrits dans la direction circonférentielle du bandage, les premières rainures de talon (8) s'étendant dans le sens de la largueur du bandage depuis la troisième rainure principale (4) vers le côté intérieur (B) du véhicule à au moins une extrémité en contact avec le sol (E) du bandage, des blocs (9) étant définis par la troisième rainure principale (4) et les premières rainures de talon (8), des deuxièmes rainures de talon (12) et des troisièmes rainures de talon (13) étant alternativement disposées à des intervalles prescrits dans la direction circonférentielle du bandage dans la nervure (7) entre la deuxième rainure principale (3) et la troisième rainure principale (4), les deuxièmes rainures de talon (12) s'étendant dans le sens de la largueur du bandage de la troisième rainure principale (4) vers le côté extérieur (A) du véhicule et chacune ayant une extrémité terminale d'extension (12a) située dans la nervure (7), les troisièmes rainures de talon (13) s'étendant dans le sens de la largueur du bandage de la troisième rainure principale (4) vers le côté extérieur (A) du véhicule et s'étendant ensuite dans la direction circonférentielle du bandage, les troisièmes rainures de talon (13) ayant chacune une extrémité terminale d'extension (13a) située dans la nervure (7), chaque troisième rainure de talon (13) s'étendant de manière à croiser seulement une deuxième rainure de talon (12) adjacente à celle-ci dans la direction circonférentielle du bandage, **caractérisé en ce que** le bandage a un rapport a/b d'une distance d'espacement (a) dans le sens de la largueur du bandage de l'extrémité terminale d'extension (12a) de la deuxième rainure de talon (12) à la deuxième rainure principale (3) à une largueur (b) de la nervure (7) entre la deuxième rainure principale (3) et la troisième rainure principale (4) étant de 0,10 à 0,35, un rapport c/d d'une distance d'espacement (c) de l'extrémité terminale d'extension (13a) de la troisième rainure de talon (13) à une troisième rainure de talon (13) adjacente à celle-ci comme mesuré le long d'une direction d'extension d'une portion s'étendant circonférentiellement de la troisième rainure de talon (13) qui s'étend dans la direction circonférentielle (T) du bandage à une longueur combinée (d) de la distance d'espacement (c) et une longueur (m) de la portion s'étendant circonférentiellement étant de 0,10 à 0,30.

2. Bandage pneumatique selon la revendication 1, dans lequel la première rainure principale (2) et la deuxième rainure principale (3) sont disposées dans une région (1) située sur le côté extérieur (A) du véhicule d'un plan équatorial (CL) du bandage, et la troisième rainure principale (4) est disposée dans une région (lA) située sur le côté intérieur du véhicule du plan équatorial du bandage.

3. Bandage pneumatique selon la revendication 2, dans lequel la première rainure principale (2) est placée dans une plage de 0,40W à 0,55W du plan équatorial (CL) du bandage vers le côté extérieur (A) du véhicule, la deuxième rainure principale (3) est placée dans une plage de 0,05W à 0,25W du plan équatorial (CL) du bandage vers le côté extérieur (A) du véhicule, et la troisième rainure principale (4) est placée dans une plage de 0,20W à 0,45W du plan équatorial (CL) du bandage vers le côté intérieur (B) du véhicule, où W (mm) est la 1/2 largueur de contact avec le sol définie comme une longueur mesurée en parallèle à un axe du bandage du plan équatorial (CL) du bandage à l'extrémité (E) en contact avec le sol du bandage.

4. Bandage pneumatique selon la revendication 1, 2 ou 3, dans lequel les premières rainures de talon (8), les deuxièmes rainures de talon (12), des portions s'étendant dans le sens de la largueur des troisièmes rainures de talon (13) qui s'étendent dans le sens de la largueur du bandage sont inclinées par rapport au sens de la largueur du bandage de sorte que des portions de celles-ci, situées sur les côtés extérieurs de véhicule de celles-ci sont positionnées plus près d'un côté de la direction s'étendant circonférentiellement de bandage (T) des troisièmes rainures de talon que des portions de celles-ci situées sur les côtés intérieurs de véhicule de celles-ci.

5. Bandage pneumatique selon la revendication 4, dans lequel les premières rainures de talon (8) ont chacune un angle d'inclinaison 1 qui est de 25° à 50° par rapport à la direction circonférentielle (T) du bandage, et les portions s'étendant dans le sens de la largueur des troisièmes rainures de talon ont chacune un angle d'inclinaison 2 qui est de 25° à 50° par rapport à la direction circonférentielle (T) du bandage.

6. Bandage pneumatique selon l'une quelconque des revendications 1 à 5, dans lequel les portions s'étendant circonférentiellement des troisièmes rainures de talon (13) ont chacune un angle d'inclinaison qui est de 0° à 30° par rapport à la direction circonférentielle (T) du bandage.

7. Bandage pneumatique selon l'une quelconque des revendications 1 à 6, dans lequel la nervure (6) entre la première rainure principale (2) et la deuxième rainure principale (3) a une largueur qui est de 10 mm à 30 mm, et la nervure (7) entre la deuxième rainure principale (3) et la troisième rainure principale (4) a une largueur qui est de 15 mm à 40 mm.

8. Bandage pneumatique selon l'une quelconque des revendications 1 à 7, dans lequel les blocs (9) ont chacun une lamelle (10) s'étendant dans le sens de la largueur du bandage.

9. Bandage pneumatique selon l'une quelconque des revendications 1 à 8, dans lequel la nervure (6) entre la première rainure principale (2) et la deuxième rainure principale (3) possède une rainure étroite (11) s'étendant dans la direction circonférentielle (T) du bandage dans une région centrale de celui-ci.

10. Bandage pneumatique selon l'une quelconque des revendications 1 à 9, dans lequel la surface de bande de roulement comprend des quatrièmes rainures de talon (14) qui sont disposées à des intervalles prescrits dans la direction circonférentielle (T) du bandage, les quatrièmes rainures de talon (14) s'étendant dans le sens de la largueur du bandage de la première rainure principale (2) vers le côté extérieur (A) du véhicule à au moins l'autre extrémité (E) en contact avec le sol du bandage, des blocs (16) étant définis par la première rainure principale (2) et les quatrièmes rainures de talon (14).

11. Bandage pneumatique selon la revendication 10, dans lequel les quatrièmes rainures de talon (14) sont inclinées par rapport à la direction dans le sens de la largueur du bandage de sorte que des portions de celles-ci situées sur les côtés extérieurs du véhicule de celles-ci sont positionnées plus près d'un côté de la direction s'étendant dans la circonférence du bandage des troisièmes rainures de talon (13) que des portions de celles-ci situées sur les côtés intérieurs du véhicule de celles-ci.

12. Bandage pneumatique selon l'une quelconque des revendications 1 à 11, dans lequel la surface de la bande de roulement comprend une quatrième rainure principale (5) qui s'étend dans la direction circonférentielle (T) du bandage, la quatrième rainure principale (5) étant disposée dans une région de la surface de la bande de roulement sur le côté intérieur (A) du véhicule de la troisième rainure principale (4).

13. Bandage pneumatique selon l'une quelconque des revendications 1 à 12, dans lequel la surface de la bande de roulement comprend une rainure étroite (15) qui s'étend dans la direction circonférentielle (T) du bandage dans une région située sur le côté extérieur (A) du bandage de la première rainure principale (2).
